(19) Europäisches Patentamt
European Patent Office
Office européen des brevets

(11) **EP 3 675 433 A1**

(12) **EUROPEAN PATENT APPLICATION**
published in accordance with Art. 153(4) EPC

(43) Date of publication:
**01.07.2020 Bulletin 2020/27**

(51) Int Cl.:
**H04L 12/58** *(2006.01)*    **G06F 13/00** *(2006.01)*

(21) Application number: **17925022.0**

(22) Date of filing: **14.09.2017**

(86) International application number:
**PCT/JP2017/033279**

(87) International publication number:
**WO 2019/053844 (21.03.2019 Gazette 2019/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mitsubishi Electric Corporation**
**Chiyoda-ku**
**Tokyo 100-8310 (JP)**

(72) Inventors:
• **NISHIKAWA, Hiroki**
  **Tokyo 100-8310 (JP)**
• **YAMAMOTO, Takumi**
  **Tokyo 100-8310 (JP)**
• **KAWAUCHI, Kiyoto**
  **Tokyo 100-8310 (JP)**

(74) Representative: **Mewburn Ellis LLP**
**Aurora Building**
**Counterslip**
**Bristol BS1 6BX (GB)**

(54) **EMAIL INSPECTION DEVICE, EMAIL INSPECTION METHOD, AND EMAIL INSPECTION PROGRAM**

(57)    In an email inspection device (10), a learning unit (20) learns a relationship between a feature of each email included in a plurality of emails and a feature of a resource accompanying each email. The resource accompanying each email includes at least either one of a file attached to each email and a resource specified by a URL in a message body of each email. A determination unit (30) extracts a feature of an inspection-target email and a feature of a resource accompanying the inspection-target email, and determines whether or not the inspection-target email is a suspicious email depending on whether or not the relationship learned by the learning unit (20) exists between the extracted features.

Fig. 1

**Description**

**Technical Field**

The present invention relates to an email inspection device, an email inspection method, and an email inspection program.

**Background Art**

Targeted attacks to commit an attack, such as theft of confidential information, on a specific organization or individual have become a grave threat. Among the targeted attacks, an attack by a targeted attack email based on an email remains one of serious threats. According to Trend Micro's survey (https://www.trendmicro.tw/cloud-content/us/pdfs/businesses/datasheets/ds_social-engi neering-attack-protection.pdf), malware infection by targeted attack emails accounts for 76% of all attacks on an enterprise. Therefore, to prevent targeted attack emails is important from the viewpoint of preventing cyber attacks that are causing damages increasingly and becoming more and more sophisticated.

Patent Literature 1 discloses a technique for comparing a regular email header with a received email header to determine whether or not the received email is a suspicious email.

Patent Literature 2 discloses a technique which, in order to prevent erroneous transmission of an email, determines and notifies whether or not the email is similar to an email that is usually transmitted to a destination determined from a destination address, based on information such as nouns included in the message body of the email.

Patent Literature 3 discloses a technique which, in order to determine whether or not a file attached to an email is a suspicious file, specifies a file format and determines whether the specified format is a permitted format.

Patent Literature 4 discloses a technique for determining whether or not a newly received email is a suspicious email from the distance between the header information of the newly received email and the header information of past emails.

**Citation List**

**Patent Literature**

Patent Literature 1: JP 2013-236308 A
Patent Literature 2: JP 2017-4126 A
Patent Literature 3: JP 2008-546111 A
Patent Literature 4: JP 2014-102708 A

**Summary of Invention**

**Technical Problem**

The conventional technique cannot detect a sophisticated targeted attack email. As a specific example, assume that a springboard in a target organization is already infected with malware. If an attacker aims at infecting a final target such as a terminal of a person who is privileged to access confidential information of the organization, it is possible that the attacker sends an email to the final target using the email address and information on the springboard. In this case, since the attacker sends the attack email knowing a feature of the springboard, it is difficult to detect the attack email with the conventional technique.

It is an objective of the present invention to detect a sophisticated attack email.

**Solution to Problem**

An email inspection device according to one aspect of the present invention includes:

a learning unit to learn a relationship between a feature of each email included in a plurality of emails and a feature of a resource accompanying each email, the resource including at least either one of a file attached to each email and a resource specified by a URL in a message body of each email; and
a determination unit to extract a feature of an inspection-target email and a feature of a resource accompanying the inspection-target email, and to determine whether or not the inspection-target email is a suspicious email depending on whether or not the relationship learned by the learning unit exists between the extracted features.

Note that "URL" is an acronym of Uniform Resource Locator.

**Advantageous Effects of Invention**

In the present invention, it is possible to detect a sophisticated attack email by determining whether or not an inspection-target email is a suspicious email depending on whether or not a pre-learned relationship exists between a feature of the inspection-target email and a feature of a resource accompanying the inspection-target email.

**Brief Description of Drawings**

Fig. 1 is a block diagram illustrating a configuration of an email inspection device according to Embodiment 1.
Fig. 2 is a block diagram illustrating a configuration of a learning unit of the email inspection device according to Embodiment 1.
Fig. 3 is a block diagram illustrating a configuration of a determination unit of the email inspection device according to Embodiment 1.
Fig. 4 is a flowchart illustrating an action of the email inspection device according to Embodiment 1.
Fig. 5 is a flowchart illustrating an action of the learning unit of the email inspection device according to Embodiment 1.
Fig. 6 is a flowchart illustrating an action of the determination unit of the email inspection device according to Embodiment 1.
Fig. 7 is a flowchart illustrating an action of a learning unit of an email inspection device according to Embodiment 2.
Fig. 8 is a flowchart illustrating an action of the learning unit of the email inspection device according to Embodiment 2.

**Description of Embodiments**

Embodiments of the present invention will be described with referring to drawings. In the drawings, the same or equivalent portions are denoted by the same reference numerals. In the description of embodiments, description of the same or equivalent portions will be appropriately omitted or simplified. The present invention is not limited to the embodiments to be described below, and various changes can be made as necessary. For example, of the embodiments to be described below, two or more embodiments may be practiced in combination. Alternatively, of the embodiments to be described below, one embodiment or a combination of two or more embodiments may be practiced partly.

Embodiment 1.

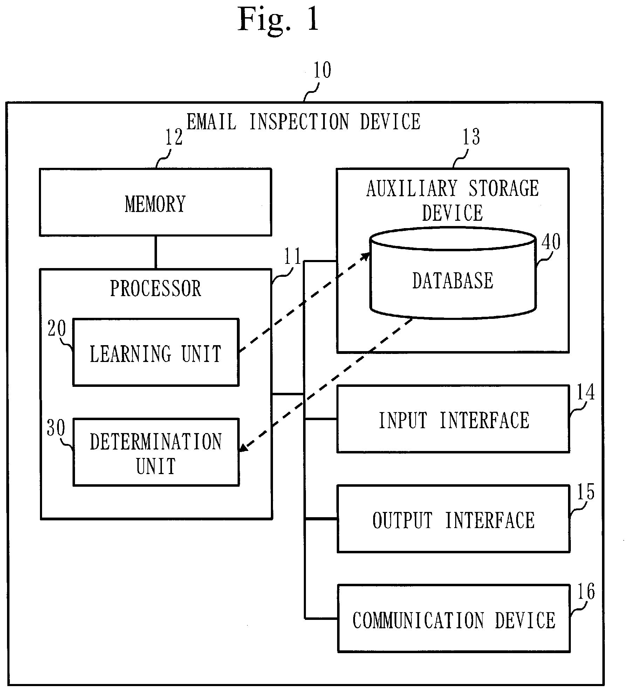

This embodiment will be described with referring to Figs. 1 to 6.
In this embodiment, a combination of a context of an email and a context of a content such as an attachment or a reference URL is employed for detecting a sophisticated attack.
A content of an email refers to a resource accompanying the email. The resource accompanying the email includes at least either one of a file attached to the email and a resource identified by the URL in the message body of the email. That is, the content is, for example, the attachment of the email or a Web page linked from the URL written in the message body of the email.
The context of the email or the context of the content refers to a meaning and a logical connection involved in the email or content. The context is extracted from the email or content as a feature of the email or content.

*** Description of Configuration ***

A configuration of an email inspection device 10 will be described with referring to Fig. 1.
The email inspection device 10 is a computer. The email inspection device 10 is provided with a processor 11 as well as other hardware devices such as a memory 12, an auxiliary storage device 13, an input interface 14, an output interface 15, and a communication device 16. The processor 11 is connected to the other hardware devices via signal lines and controls these other hardware devices.
The email inspection device 10 is provided with a learning unit 20, a determination unit 30, and a database 40, as facility elements. Facilities of the learning unit 20 and determination unit 30 are implemented by software.
The processor 11 is a device that executes an email inspection program. The email inspection program is a program that implements the facilities of the learning unit 20 and determination unit 30. The processor 11 is, for example, a CPU. Note that "CPU" is an acronym of Central Processing Unit.

The memory 12 is a device that stores the email inspection program. The memory 12 is, for example, a flash memory or RAM. Note that "RAM" is an acronym of Random Access Memory.

The auxiliary storage device 13 is a device in which the database 40 is arranged. The auxiliary storage device 13 is, for example, a flash memory or HDD. Note that "HDD" is an acronym of Hard Disk Drive. The database 40 is loaded in the memory 12 as necessary.

The input interface 14 is an interface connected to an input device (not illustrated). The input device is a device operated by a user to input data to the email inspection program. The input device is, for example, a mouse, a keyboard, or a touch panel.

The output interface 15 is an interface connected to a display (not illustrated). The display is a device that displays data outputted from the email inspection program onto a monitor. The display is, for example, an LCD. Note that "LCD" is an acronym of Liquid Crystal Display.

The communication device 16 includes a receiver which receives data to be inputted to the email inspection program, and a transmitter which transmits data outputted from the email inspection program. The communication device 16 is, for example, a communication chip or an NIC. Note that "NIC" is an acronym of Network Interface Card.

The email inspection program is read by the processor 11 and executed by the processor 11. The memory 12 stores not only the email inspection program but also an OS. Note that "OS" is an acronym of Operating System. The processor 11 executes the email inspection program while executing the OS.

The email inspection program and the OS may be stored in the auxiliary storage device 13. If the email inspection program and the OS are stored in the auxiliary storage device 13, they are loaded to the memory 12 and executed by the processor 11.

The email inspection program may be partly or entirely incorporated in the OS.

The email inspection device 10 may be provided with a plurality of processors that replace the processor 11. These plurality of processors share execution of the email inspection program. Each processor is, for example, a CPU.

Data, information, a signal value, and a variable value which are utilized, processed, or outputted by the email inspection program are stored in the memory 12, the auxiliary storage device 13, or a register or cache memory in the processor 11.

The email inspection program is a program that causes the computer to execute a process performed by the learning unit 20 and a process performed by the determination unit 30, as a learning process and a determination process, respectively. Alternatively, the email inspection program is a program that causes the computer to execute a procedure performed by the learning unit 20 and a procedure performed by the determination unit 30, as a learning procedure and a determination procedure, respectively. The email inspection program may be recorded in a computer-readable medium and provided in the form of the medium; may be stored in a recording medium and provided in the form of the medium; or may be provided in the form of a program product.

The email inspection device 10 may be composed of one computer, or of a plurality of computers. If the email inspection device 10 is composed of a plurality of computers, the facilities of the learning unit 20 and determination unit 30 may be distributed among the individual computers and implemented by the individual computers.

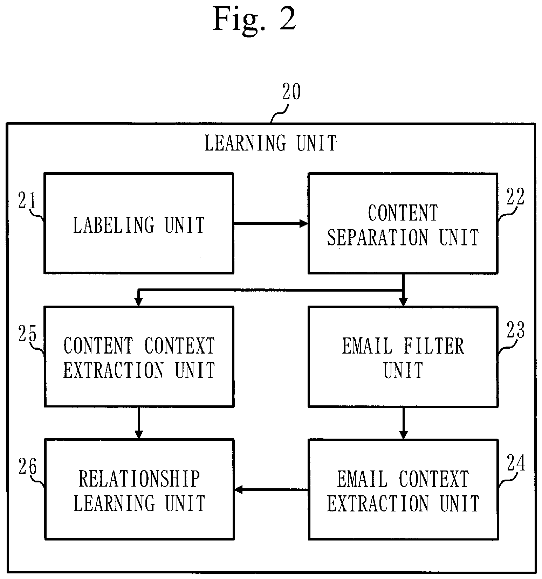

A configuration of the learning unit 20 will be described with referring to Fig. 2.

The learning unit 20 is provided with a labeling unit 21, a content separation unit 22, an email filter unit 23, an email context extraction unit 24, a content context extraction unit 25, and a relationship learning unit 26.

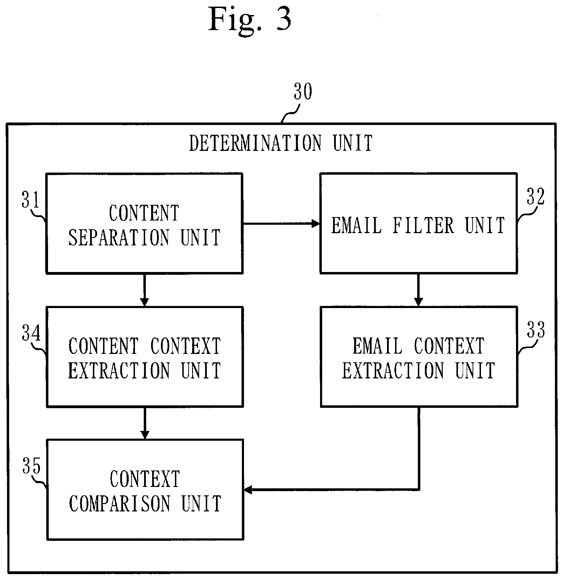

A configuration of the determination unit 30 will be described with referring to Fig. 3.

The determination unit 30 is provided with a content separation unit 31, an email filter unit 32, an email context extraction unit 33, a content context extraction unit 34, and a context comparison unit 35.

\*\*\* Description of Action \*\*\*

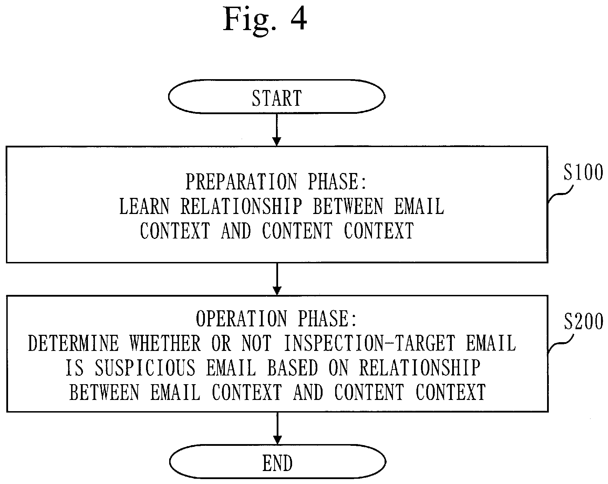

An action of the email inspection device 10 according to this embodiment will be described with referring to Fig. 1 as well as Fig. 4. The action of the email inspection device 10 corresponds to an email inspection method according to this embodiment.

The action of the email inspection device 10 is roughly divided into two phases: preparation phase S100 and operation phase S200.

In preparation phase S100, the learning unit 20 learns a relationship between a feature of each email included in a plurality of emails and a feature of a resource accompanying each email. The resource accompanying each email includes at least either one of the file attached to each email and a resource identified by the URL in the message body of each email.

Specifically, in preparation phase S100, an analysis-target email is inputted to the learning unit 20. The learning unit 20 learns the relationship between a context of the analysis-target email and a context of a content of the analysis-target email. The learning unit 20 registers a learning result with the database 40.

In operation phase S200, the determination unit 30 extracts a feature of an inspection-target email and a feature of a resource accompanying the inspection-target email. The determination unit 30 determines whether or not the inspection-target email is a suspicious email depending on whether or not the relationship learned by the learning unit 20 exists between the extracted features.

Specifically, in operation phase S200, the inspection-target email is inputted to the determination unit 30. The determination unit 30 refers to the database 40 and identifies a relationship that matches the inspection-target email, thereby determining whether or not the inspection-target email is a suspicious email. That is, the determination unit 30 determines whether or not an email containing a content directly or indirectly is unnatural, based on information registered with the database 40.

Each phase will be described.

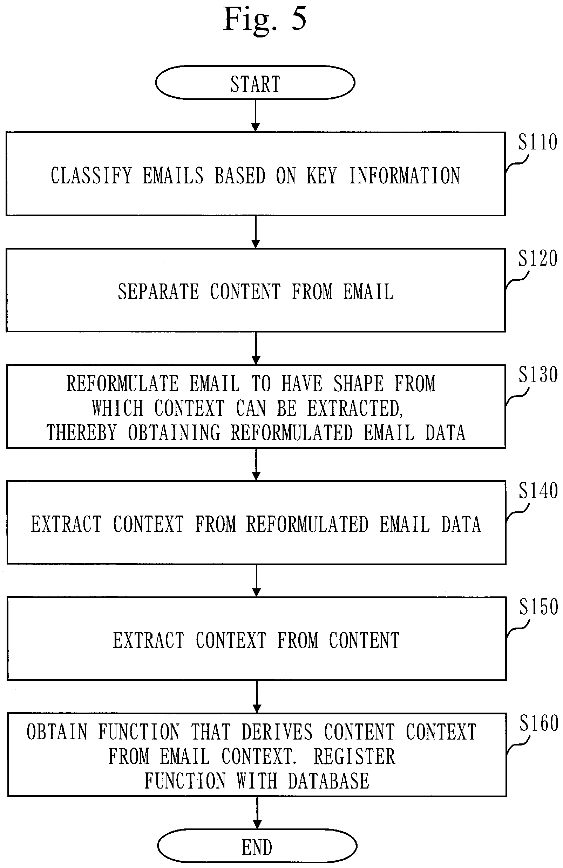

Preparation phase S100 will now be described with referring to Fig. 2 as well as Fig. 5.

In step S110, one or more analysis-target email sets are prepared. Every one of these email sets is supposed to include a content. The analysis-target email set is inputted to the labeling unit 21. The labeling unit 21 labels emails included in the analysis-target email set according to key information. That is, the labeling unit 21 classifies analysis-target emails into several email sets based on the key information. The key information is destination information in this embodiment. The key information may be any information as far as it is information, such as the title, that can be used for email classification. If a title is employed, a label is determined depending on whether or not the title includes a specific keyword. Labeling takes place until the analysis-target email set becomes empty. The key information is used as an index of an element to be registered with the database.

In step S120, each email set obtained in step S110 is inputted to the content separation unit 22. The content separation unit 22 picks up an email from each email set. The content separation unit 22 extracts a content from the picked-up email. That is, the content separation unit 22 separates the content from each email classified by the labeling unit 21. The content separation unit 22 outputs two types of data: the content and the content-separated email.

If the content is an attachment, the content separation unit 22 can extract the attachment by parsing the analysis-target email using, for example, a Python email package (http://docs.python.jp/2/library/email.parser.html).

In step S130, the content-separated email by step S120 is inputted to the email filter unit 23. The email filter unit 23 reformulates the content-separated email based on the title, To, Cc, and the message body of the content-separated email to have a shape from which a context can be extracted, thereby obtaining reformulated email data. That is, the email filter unit 23 extracts only data utilized for context extraction from the content-separated email, and outputs the extracted data as the reformulated email data. In this embodiment, the reformulated email data consists of three elements: title, address information, and message body. Of the three elements, one or two elements may be omitted. Quotations, signature, and so on may be removed from the original text of the message body, and the resultant message body may be modified into an easy-to-analyze form.

In step S140, the reformulated email data obtained in step S130 is inputted to the email context extraction unit 24 as learning data. The email context extraction unit 24 extracts the context from the reformulated mail data. The context extracted by the email context extraction unit 24 will be referred to as an email context. In this embodiment, the email context is expressed in a vector format. However, the email context may be expressed in a keyword-group format.

The email context is expressed by concatenation of feature vectors that can be extracted from the email. If the reformulated email data consists of three elements of the title, the destination information, and the message body, the individual elements are replaced by feature vectors, so that three feature vectors are obtained. After that, the feature vectors are concatenated to obtain the email context.

How a feature vector is extracted from each element will be described over a case of destination information and a case of a text such as the title and the message body. As mentioned earlier, assume that the destination information is utilized as the key information.

How destination information is converted into a feature vector depends on whether or not the destination information includes individual destinations included in a key information candidate group. For example, assume that a key information candidate group includes four destinations: "xxx@ab.com", "yyy@ab.com", "zzz@ab.com", and "abc@xx.com". Also assume that a destination information destination group includes three destinations: "xxx@ab. com", "zzz@ab.com", and "efg@xy.com". In this case, the destination information is converted into a feature vector as in expression (1).

[Formula 1]

$$\vec{v} = (1,0,1,0) \qquad (1)$$

A text such as the title and the message body is converted into a feature vector with using a natural language processing technique such as doc2vec (https://radimrehurek.com/gensim/models/doc2vec.html). Alternatively, a text may be converted into a feature vector by vectorizing, using BoW, a keyword extracted by a keyword extraction technique such as TF-IDF. Note that "TF" is an acronym of Term Frequency, that "IDF" is an acronym of Inverse Document Frequency, and that "BoW" is an acronym of Bag of Words.

In accordance with the above procedure, a feature vector as in expression (2) is obtained from the email.
[Formula 2]

$$\vec{v} = \vec{v_a} \bullet \vec{v_b} \bullet \vec{v_c} \qquad (2)$$

Note that the operator "·" is an operator that concatenates vector elements, that the vector $v_a$ is a feature vector of the destination information, that the vector $v_b$ is a feature vector of the title, and that the vector $v_c$ is a feature vector of the message body.

In step S150, the content extracted in step S120 is inputted to the content context extraction unit 25. The content context extraction unit 25 extracts a context from the content in accordance with the type of the content separated from the email. The context extracted by the content context extraction unit 25 will be referred to as a content context. In this embodiment, the content context is expressed in the vector format just as the email context is. Alternatively, the content context may be expressed in a keyword group format.

If the content is a PDF-format document file, it is possible to extract a text written in the PDF and a file name by using a tool such as PDFMiner (http://www.unixuser.org/-euske/python/pdfminer/). Note that "PDF" is an acronym of Portable Document Format.

An extracted text is converted into a feature vector with using a natural language processing technique such as doc2vec, as with the title and message body of the email.

In step S160, the email context obtained in step S140 and the content context obtained in step S150 are inputted to the relationship learning unit 26. The relationship learning unit 26 obtains a function that derives a content context from an email context. That is, the relationship learning unit 26 obtains a function expressing the relationship between the email context and the content context. The relationship learning unit 26 registers the obtained function with the database 40 together with the key information.

How the function is obtained specifically will be described.

Assume that a set of email contexts obtained from a certain email set is denoted by $C_m$, and that an element of Cm is denoted by $c_{mi}$. Also assume that a set of content contexts obtained from the same email set is denoted by $C_c$, and that an element of $C_c$ is denoted by $C_{ci}$. This will be expressed by expressions (3), (4), (5), and (6).

$$c_{mi} \in C_m \ (0 \leq i \leq N) \qquad (3)$$

$$c_{ci} \in C_c \ (0 \leq i \leq N) \qquad (4)$$

$$c_{mi} = (x_{i1}, x_{i2}, \ldots, x_{iL}) \qquad (5)$$

$$c_{ci} = (t_{i1}, t_{i2}, \ldots, t_{iM}) \qquad (6)$$

Note that N is a number of elements of the email set, that $c_{mi}$ is an L-dimensional vector, and that $c_{ci}$ is an M-dimensional vector.

Elements of a function f that derives $c_{ci}$ from $c_{mi}$ finally is indicated in expression (7).

$$f(c_{mi}) = c_{yi} = (y_{i1}, y_{i2}, \ldots, y_{iM}) \qquad (7)$$

An example of a loss function E to learn the function f by stochastic gradient descent is indicated in expression (8).
[Formula 3]

$$E(c_{ci}, c_{yi}) = -\frac{1}{B} \sum_i \sum_k t_{ik} \log y_{ik} \qquad (8)$$

Note that B is a batch number selected from within the email set, for use in learning.

The relationship learning unit 26 registers the function f learned based on the above expressions with the database 40 as data expressing the relationship between the email context and the content context.

As described above, in preparation phase S100, the learning unit 20 classifies a plurality of emails into two or more email sets according to the key information of individual emails included the plurality of emails. The key information of each email includes at least either one of the destination of each email and the title of each email. The learning unit 20 learns, for each email set, the relationship between the feature of each email and the feature of a resource accompanying the email. The learning unit 20 registers, for each email set, data indicating the relationship with the database 40 together with corresponding key information.

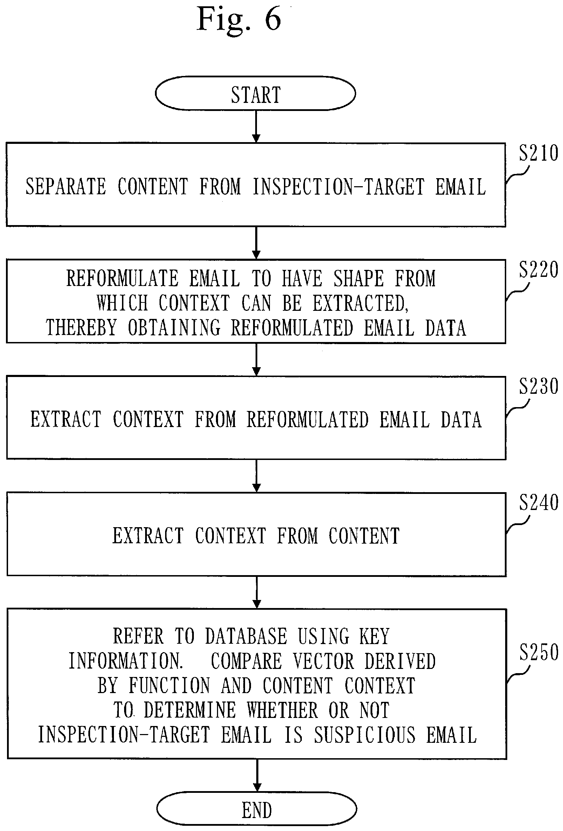

Operation phase S200 will now be described with referring to Fig. 3 as well as Fig. 6.

In step S210, the content separation unit 31 having the same facility as that of the content separation unit 22 separates a content from an inspection-target email in accordance with the same process as that of step S120.

In step S220, the email filter unit 32 having the same facility as that of the email filter unit 23 obtains reformulated email data from the content-separated email in accordance with the same process as that of step S130. At the same time, the email filter unit 32 obtains key information as well.

In step S230, the email context extraction unit 33 having the same facility as that of the email context extraction unit 24 extracts an email context from the reformulated email data in accordance with the same process as that of step S140.

In step S240, the content context extraction unit 34 having the same facility as that of the content context extraction unit 25 extracts a content context from the content in accordance with the same process as that of step S150.

In step S250, the email context obtained in step S230 and the content context obtained in step S240 are inputted to the context comparison unit 35. The context comparison unit 35 determines whether or not the inspection-target email is a suspicious email by determining whether or not the email context and the content context are similar using the function registered with the database 40. That is, the context comparison unit 35 inputs data indicating one context out of the email context and the content context to the function obtained by the relationship learning unit 26. Then, the context comparison unit 35 determines whether or not the inspection-target email is a suspicious email depending on whether or not the context indicated by data obtained as output from this function is similar to the other context out of the email context and the content context.

How a suspicious email is determined specifically will be described.

Assume that an email context obtained from the suspicious email is denoted by $c'_m$ and that a content context obtained from the same email is denoted by $c'_c$.

The context comparison unit 35 refers to the database 40 using the key information obtained in step S220 and extracts the function f registered in preparation phase S100. The context comparison unit 35 inputs the email context $c'_m$ obtained in step S230 to the extracted function f to obtain a map $c'_y$ by the function f. This is expressed by expression (9).

$$f(c'_m) = c'_y = (y'_1, y'_2, \ldots, y'_M) \qquad (9)$$

The context comparison unit 35 inputs obtained $c'_y$ and the content context $c'_c$ which is obtained in step S220 to an evaluation function g which evaluates a similarity of two vectors. The context comparison unit 35 compares an evaluation value of the obtained similarity with a threshold value th to determine whether $c'_y$ and $c'_c$ are similar to each other. As an example of the evaluation function g, an evaluation function g that employs a cosine similarity is indicated in expression (10).

$$g(c'_c, c'_y) = (c'_c \cdot c'_y)/(|c'_c||c'_y|) \qquad (10)$$

If the evaluation value of the similarity is lower than the threshold value th, there is a gap between the content context and the email context. Hence, the context comparison unit 35 determines that the inspection-target email is a suspicious email.

As has been described above, in operation phase S200, the determination unit 30 extracts the feature of the inspection-target email and the feature of the resource accompanying the inspection-target email. The determination unit 30 searches the database 40 using the key information of the inspection-target email. The determination unit 30 determines whether or not the inspection-target email is a suspicious email depending on whether or not the relationship indicated by data obtained as the search result exists between the extracted features.

*** Description on Effect of Embodiment ***

In this embodiment, it is possible to detect a sophisticated attack email by determining whether or not an inspection-target email is a suspicious email depending on the whether or not a pre-learned relationship exists between a feature of the inspection-target email and a feature of a resource accompanying the inspection-target email.

According to this embodiment, it is possible to detect, as a suspicious email, a received email in which an email context and a content context do not match. As a result, malware infection via email, which is incurred by a sophisticated attack, can be prevented.

To prevent a targeted attack email is significant for preventing a cyber attack that has become sophisticated. As a specific example, assume that a springboard in a target organization is already infected with malware. Assume that an attacker aiming at infecting a final target has sent an email to the final target using the email address and information on the springboard. Even in this case, it is possible to detect the sophisticated targeted attack email by detecting the unnaturalness of the content based on the relationship between the email context and the content context.

*** Other Configurations ***

In this embodiment, the facilities of the learning unit 20 and determination unit 30 are implemented by software. As a modification, the facilities of the learning unit 20 and determination unit 30 may be implemented by a combination of software and hardware. That is, some of the facilities of the learning unit 20 and determination unit 30 may be implemented by dedicated hardware, and the remaining facilities may be implemented by software.

The dedicated hardware is, for example, a single circuit, a composite circuit, a programmed processor, a parallel-programmed processor, a logic IC, a GA, an FPGA, or an ASIC. Note that "IC" is an acronym of Integrated Circuit, that "GA" is an acronym of Gate Array, that "FPGA" is an acronym of Field-Programmable Gate Array, and that "ASIC" is an acronym of Application Specific Integrated Circuit.

The processor 11 and the dedicated hardware are both processing circuitry. That is, even if the configuration of the email inspection device 10 includes the configurations illustrated in Fig. 1 and Fig. 3, an action of the learning unit 20 and an action of the determination unit 30 are performed by the processing circuitry.

Embodiment 2.

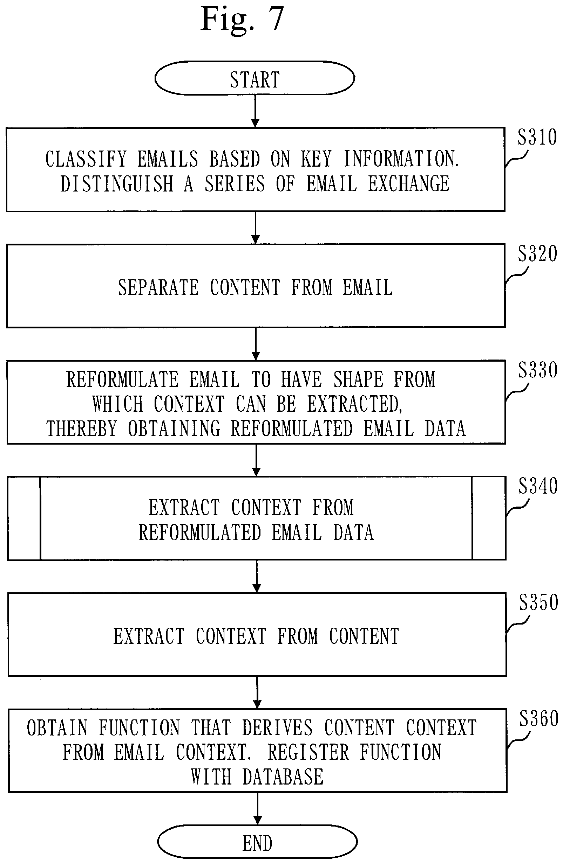

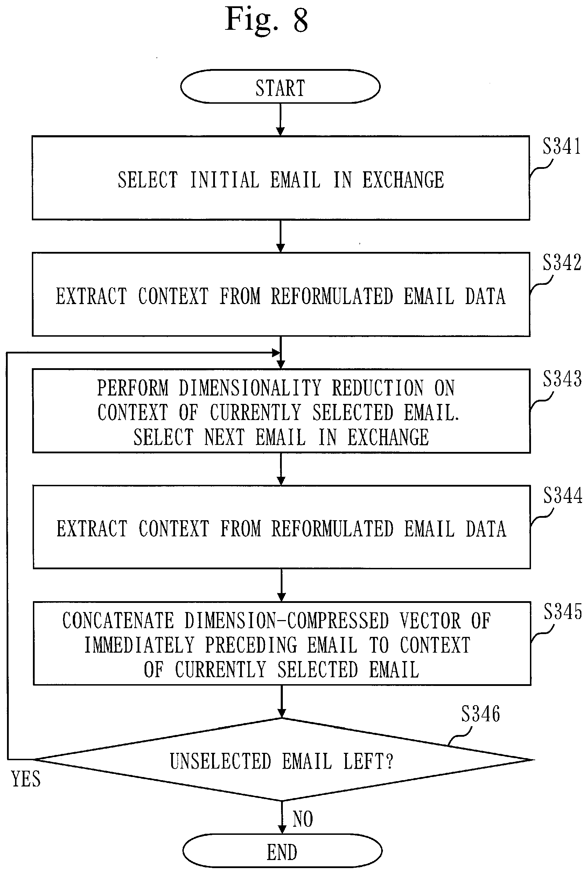

This embodiment will be described with referring to Figs. 7 and 8 mainly regarding its differences from Embodiment 1.

*** Description of Configuration ***

A configuration of an email inspection device 10 according to this embodiment is the same as that of Embodiment 1 illustrated in Figs. 1 to 3, and accordingly its description will be omitted.

*** Description of Action ***

An action of the email inspection device 10 according to this embodiment will be described. The action of the email inspection device 10 corresponds to an email inspection method according to this embodiment.

In Embodiment 1, while a context involved in one email can be extracted, a context included in a series of email exchange cannot be extracted. A context included in a series of email exchange refers to a meaning and a logical connection which are formed across two or more emails included in the exchange. A series of email exchange includes, for example, a question email to an organization such as an enterprise, as the first email, and an answer email from the organization and a re-question or reminder email to the organization, as the second and subsequent emails.

In this embodiment, preparation phase S100 is different from that of Embodiment 1. Specifically, an email set which is inputted at the time of learning and how an email context is calculated are different from those in Embodiment 1. Because of this difference, a context included in a series of email exchange can be extracted in Embodiment 2.

Preparation phase S100 will now be described with referring to Fig. 2 as well as Fig. 7.

In step S310, a labeling unit 21 not only classifies analysis-target emails into several email sets based on key information by the same process as in step S110, but also distinguishes a series of email exchange from among the analysis-target emails.

In step S320, a content separation unit 22 separates a content from each email classified in step S310 by the same process as in step S120.

In step S330, an email filter unit 23 extracts only data utilized for context extraction, from the content-separated email of step S320, and outputs the extracted data as reformulated email data by the same process as in step S130.

In step S340, the reformulated email data obtained in step S330 is inputted to an email context extraction unit 24 as learning data. This learning data contains reformulated email data of every email included in the exchange distinguished in step S310. The email context extraction unit 24 extracts an email context in accordance with a procedure to be described later.

In step S350, a content context extraction unit 25 extracts a content context from the content extracted in step S320, by the same process as in step S150.

In step S360, a relationship learning unit 26 obtains a function representing a relationship between the email context obtained in step S340 and the content context obtained in step S350 by the same process as in step S160. The relationship learning unit 26 registers the obtained function with the database 40 together with the key information.

A procedure of step S340 will be described with referring to Fig. 8.

In step S341, the email context extraction unit 24 selects an initial email in the exchange.

In step S342, the email context extraction unit 24 extracts a context from the reformulated email data of the currently selected email. Specifically, the email context extraction unit 24 calculates a J-dimensional vector expressing a feature of the first email. An actual context of the first email is an L-dimensional vector $c_{m1}$. However, in this embodiment, a J-dimensional vector obtained by adding K of empty elements to the L-dimensional vector $c_{m1}$ is used as the context of the first email. Note that J is an integer and that K is an integer smaller than J, specifically, K is an integer satisfying $L = J - K$. The L-dimensional vector $c_{m1}$ is calculated in the same manner as in Embodiment 1. The email context extraction unit 24 sets the calculated J-dimensional vector as first data expressing the feature of the first email. In this embodiment, the first data is the email context of the first email.

In step S343, the email context extraction unit 24 performs dimensionality reduction on the context of the currently selected email to compress the context of the currently selected email to a vector having a predetermined length. Specifically, the email context extraction unit 24 performs dimensionality reduction on the J-dimensional vector obtained over the currently selected email, thereby obtaining a K-dimensional vector. If the currently selected email is the first email, the J-dimensional vector corresponding to the first data is compressed to a K-dimensional vector. If the currently selected email is the second or subsequent email included in the exchange, a J-dimensional vector corresponding to second data to be described later is compressed to a K-dimensional vector. After that, the email context extraction unit 24 selects a next email included in the exchange.

In step S344, the email context extraction unit 24 extracts a context from reformulated email data of the currently selected email. Specifically, the email context extraction unit 24 calculates an L-dimensional vector $c_{mi}$ expressing a feature of each of the second and subsequent emails. The L-dimensional vector $c_{mi}$ is calculated in the same manner as in Embodiment 1.

In step S345, the email context extraction unit 24 concatenates a dimension-compressed vector of an immediately preceding email to the context extracted in step S344. That is, the email context extraction unit 24 concatenates the L-dimensional vector $c_{mi}$ calculated in step S344 and the K-dimensional vector obtained in step S343. The email context extraction unit 24 sets a post-concatenation J-dimensional vector as the second data expressing the feature of each of the second and subsequent emails. In this embodiment, the second data is the email context of each of the second and subsequent emails. The K-dimensional vector obtained in step S343 is a vector obtained by performing dimensionality reduction on the J-dimensional vector corresponding to data expressing a feature of an email that immediately precedes in the exchange. The data expressing the feature of the email that immediately precedes is the first data if the immediately preceding email is the first email. The data expressing the feature of the email that immediately precedes is the second data if the immediately preceding email is any email out of the second and subsequent emails.

In step S346, the email context extraction unit 24 determines whether or not all the emails included in the exchange have been selected. If an unselected email is left, the process of step S343 is performed. If no unselected email is left, the procedure of step S340 ends.

As described above, in preparation phase S100, the learning unit 20 generates the first data, the second data, and third data. The first data is data expressing the feature of the first email included in the series of email exchange. The second data is data expressing the feature of each of the second and subsequent emails included in the exchange. The second data takes over the feature of an email that precedes in the exchange. The third data is data expressing the feature of a resource accompanying each email included in the exchange. In this embodiment, the third data is the content context. The learning unit 20 learns the relationship between the feature of each email and the feature of the resource accompanying the email, using the generated first, second, and third data.

*** Description on Effect of Embodiment ***

According to this embodiment, the contexts included in a series of email exchange can be taken over consecutively. As a result, the context of the exchange can also be considered.

*** Other Configurations ***

In this embodiment, the facilities of the learning unit 20 and determination unit 30 are implemented by software, as in Embodiment 1. Alternatively, the facilities of the learning unit 20 and determination unit 30 may be implemented by a combination of software and hardware, as in the modification of Embodiment 1.

**Reference Signs List**

10: email inspection device; 11: processor; 12: memory; 13: auxiliary storage device; 14: input interface; 15: output interface; 16: communication device; 20: learning unit; 21: labeling unit; 22: content separation unit; 23: email filter unit; 24: email context extraction unit; 25: content context extraction unit; 26: relationship learning unit; 30: determination unit; 31: content separation unit; 32: email filter unit; 33: email context extraction unit; 34: content context extraction unit; 35: context comparison unit; 40: database

**Claims**

1. An email inspection device comprising:

    a learning unit to learn a relationship between a feature of each email included in a plurality of emails and a feature of a resource accompanying each email, the resource including at least either one of a file attached to each email and a resource specified by a URL in a message body of each email; and
    a determination unit to extract a feature of an inspection-target email and a feature of a resource accompanying the inspection-target email, and to determine whether or not the inspection-target email is a suspicious email depending on whether or not the relationship learned by the learning unit exists between the extracted features.

2. The email inspection device according to claim 1,
    wherein the learning unit classifies the plurality of emails into two or more email sets according to key information of individual emails included the plurality of emails, the key information including at least either one of a destination of each email and a title of each email, learns, for each email set, the relationship, and registers, for each email set, data indicating the relationship with a database together with corresponding key information, and
    wherein the determination unit searches the database using the key information of the inspection-target email, and determines whether or not the inspection-target email is a suspicious email depending on whether or not the relationship indicated by data obtained as a search result exists between the extracted features.

3. The email inspection device according to claim 1 or 2,
    wherein the learning unit obtains a function representing the relationship, and
    wherein the determination unit inputs data indicating one feature out of the extracted features to the function obtained by the learning unit, and determines whether or not the inspection-target email is a suspicious email depending on whether or not a feature indicated by data obtained as output from the function is similar to the other feature out of the extracted features.

4. The email inspection device according to any one of claims 1 to 3, wherein the learning unit generates first data, second data, and third data, the first data expressing a feature of a first email included in a series of email exchange, the second data expressing a feature of each of a second and subsequent emails included in the exchange and taking over a feature of an email that precedes in the exchange, the third data expressing a feature of a resource accompanying each email included in the exchange, and learns the relationship by using the generated first data, the generated second data, and the generated third data.

5. The email inspection device according to claim 4, wherein the learning unit calculates a J-dimensional vector expressing the feature of the first email, sets the calculated J-dimensional vector as the first data, calculates a (J-K)-dimensional vector expressing features of the second and subsequent individual emails, where J is an integer and K is an integer smaller than J, concatenates the calculated (J-K)-dimensional vector and a K-dimensional vector which is obtained by performing dimensionality reduction on the J-dimensional vector corresponding to data expressing a feature of an email immediately preceding in the exchange, and sets a post-concatenation J-dimensional vector as the second data.

6. An email inspection method comprising:

by a learning unit, learning a relationship between a feature of each email included in a plurality of emails and a feature of a resource accompanying each email, the resource including at least either one of a file attached to each email and a resource specified by a URL in a message body of each email; and
by a determination unit, extracting a feature of an inspection-target email and a feature of a resource accompanying the inspection-target email, and determining whether or not the inspection-target email is a suspicious email depending on whether or not the relationship learned by the learning unit exists between the extracted features.

7. An email inspection program that causes a computer to execute:

a learning process of learning a relationship between a feature of each email included in a plurality of emails and a feature of a resource accompanying each email, the resource including at least either one of a file attached to each email and a resource specified by a URL in a message body of each email; and
a determination process of extracting a feature of an inspection-target email and a feature of a resource accompanying the inspection-target email, and determining whether or not the inspection-target email is a suspicious email depending on whether or not the relationship learned by the learning process exists between the extracted features.

# Fig. 1

EMAIL INSPECTION DEVICE 10

MEMORY 12

PROCESSOR 11

LEARNING UNIT 20

DETERMINATION UNIT 30

AUXILIARY STORAGE DEVICE 13

DATABASE 40

INPUT INTERFACE 14

OUTPUT INTERFACE 15

COMMUNICATION DEVICE 16

# Fig. 2

# Fig. 3

30

DETERMINATION UNIT

31 CONTENT SEPARATION UNIT

32 EMAIL FILTER UNIT

34 CONTENT CONTEXT EXTRACTION UNIT

33 EMAIL CONTEXT EXTRACTION UNIT

35 CONTEXT COMPARISON UNIT

# Fig. 4

```
         ┌─────────────┐
         │    START    │
         └──────┬──────┘
                │
                ▼
┌──────────────────────────────────────────┐
│           PREPARATION PHASE:              │  S100
│   LEARN RELATIONSHIP BETWEEN EMAIL        │
│    CONTEXT AND CONTENT CONTEXT            │
└──────────────────┬───────────────────────┘
                   │
                   ▼
┌──────────────────────────────────────────┐
│            OPERATION PHASE:               │  S200
│ DETERMINE WHETHER OR NOT INSPECTION-TARGET EMAIL │
│   IS SUSPICIOUS EMAIL BASED ON RELATIONSHIP │
│   BETWEEN EMAIL CONTEXT AND CONTENT CONTEXT │
└──────────────────┬───────────────────────┘
                   │
                   ▼
            ┌─────────────┐
            │     END     │
            └─────────────┘
```

# Fig. 5

START

↓

CLASSIFY EMAILS BASED ON KEY INFORMATION — S110

↓

SEPARATE CONTENT FROM EMAIL — S120

↓

REFORMULATE EMAIL TO HAVE SHAPE FROM
WHICH CONTEXT CAN BE EXTRACTED,
THEREBY OBTAINING REFORMULATED EMAIL DATA — S130

↓

EXTRACT CONTEXT FROM REFORMULATED EMAIL DATA — S140

↓

EXTRACT CONTEXT FROM CONTENT — S150

↓

OBTAIN FUNCTION THAT DERIVES CONTENT CONTEXT
FROM EMAIL CONTEXT. REGISTER
FUNCTION WITH DATABASE — S160

↓

END

# Fig. 6

```
                    ┌─────────────┐
                    │    START    │
                    └─────────────┘
                           │
                           ▼
    ┌──────────────────────────────────────────────┐   S210
    │  SEPARATE CONTENT FROM INSPECTION-TARGET EMAIL │
    └──────────────────────────────────────────────┘
                           │
                           ▼
    ┌──────────────────────────────────────────────┐   S220
    │    REFORMULATE EMAIL TO HAVE SHAPE FROM        │
    │      WHICH CONTEXT CAN BE EXTRACTED,           │
    │  THEREBY OBTAINING REFORMULATED EMAIL DATA     │
    └──────────────────────────────────────────────┘
                           │
                           ▼
    ┌──────────────────────────────────────────────┐   S230
    │  EXTRACT CONTEXT FROM REFORMULATED EMAIL DATA  │
    └──────────────────────────────────────────────┘
                           │
                           ▼
    ┌──────────────────────────────────────────────┐   S240
    │         EXTRACT CONTEXT FROM CONTENT           │
    └──────────────────────────────────────────────┘
                           │
                           ▼
    ┌──────────────────────────────────────────────┐
    │        REFER TO DATABASE USING KEY             │   S250
    │    INFORMATION.  COMPARE VECTOR DERIVED        │
    │     BY FUNCTION AND CONTENT CONTEXT            │
    │      TO DETERMINE WHETHER OR NOT               │
    │  INSPECTION-TARGET EMAIL IS SUSPICIOUS EMAIL   │
    └──────────────────────────────────────────────┘
                           │
                           ▼
                    ┌─────────────┐
                    │     END     │
                    └─────────────┘
```

# Fig. 7

START

CLASSIFY EMAILS BASED ON KEY INFORMATION. DISTINGUISH A SERIES OF EMAIL EXCHANGE — S310

SEPARATE CONTENT FROM EMAIL — S320

REFORMULATE EMAIL TO HAVE SHAPE FROM WHICH CONTEXT CAN BE EXTRACTED, THEREBY OBTAINING REFORMULATED EMAIL DATA — S330

EXTRACT CONTEXT FROM REFORMULATED EMAIL DATA — S340

EXTRACT CONTEXT FROM CONTENT — S350

OBTAIN FUNCTION THAT DERIVES CONTENT CONTEXT FROM EMAIL CONTEXT. REGISTER FUNCTION WITH DATABASE — S360

END

# Fig. 8

```
                    ┌─────────────┐
                    │    START    │
                    └─────────────┘
                           │
                           ▼
        ┌──────────────────────────────────────────┐   S341
        │     SELECT INITIAL EMAIL IN EXCHANGE      │
        └──────────────────────────────────────────┘
                           │
                           ▼
        ┌──────────────────────────────────────────┐   S342
        │  EXTRACT CONTEXT FROM REFORMULATED EMAIL DATA │
        └──────────────────────────────────────────┘
                           │
                           ▼
        ┌──────────────────────────────────────────┐   S343
        │    PERFORM DIMENSIONALITY REDUCTION ON    │
        │    CONTEXT OF CURRENTLY SELECTED EMAIL.   │
        │       SELECT NEXT EMAIL IN EXCHANGE       │
        └──────────────────────────────────────────┘
                           │
                           ▼
        ┌──────────────────────────────────────────┐   S344
        │  EXTRACT CONTEXT FROM REFORMULATED EMAIL DATA │
        └──────────────────────────────────────────┘
                           │
                           ▼
        ┌──────────────────────────────────────────┐   S345
        │  CONCATENATE DIMENSION-COMPRESSED VECTOR OF │
        │   IMMEDIATELY PRECEDING EMAIL TO CONTEXT  │
        │        OF CURRENTLY SELECTED EMAIL        │
        └──────────────────────────────────────────┘
                           │
                           ▼
                                                        S346
          ◇ UNSELECTED EMAIL LEFT? ◇
       YES                    │ NO
                              ▼
                    ┌─────────────┐
                    │     END     │
                    └─────────────┘
```

## INTERNATIONAL SEARCH REPORT

| International application No. |
| --- |
| PCT/JP2017/033279 |

**A. CLASSIFICATION OF SUBJECT MATTER**
Int. Cl. H04L12/58(2006.01)i, G06F13/00(2006.01)i

According to International Patent Classification (IPC) or to both national classification and IPC

**B. FIELDS SEARCHED**

Minimum documentation searched (classification system followed by classification symbols)
Int. Cl. H04L12/58, G06F13/00

Documentation searched other than minimum documentation to the extent that such documents are included in the fields searched
Published examined utility model applications of Japan      1922-1996
Published unexamined utility model applications of Japan   1971-2017
Registered utility model specifications of Japan           1996-2017
Published registered utility model applications of Japan   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | ZHAN, Wang et al., A Design of Image-based Spam Filtering Based On Textual and Visual Information, IPSJ SIG Notes, 2008-DPS-134, 2008-CSEC-40, 06 March 2008, pp. 279-284 | 1, 3, 6, 7<br>2<br>4, 5 |
| Y | JP 2006-166042 A (NEC CORP.) 22 June 2006, paragraph [0036] (Family: none) | 2 |
| A | JP 2004-362559 A (MICROSOFT CORP.) 24 December 2004, entire text, all drawings & US 2005/0022008 A1, entire text, all drawings & CN 1573784 A | 1-7 |
| A | JP 2011-34417 A (KDDI CORP.) 17 February 2011, entire text, all drawings (Family: none) | 1-7 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>22.11.2017 | Date of mailing of the international search report<br>05.12.2017 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

## REFERENCES CITED IN THE DESCRIPTION

**Patent documents cited in the description**

- JP 2013236308 A
- JP 2017004126 A
- JP 2008546111 A
- JP 2014102708 A